# EUROPÄISCHE PATENTANMELDUNG

(11) **EP 0 658 867 A2**
(43) Veröffentlichungstag der Anmeldung: **21.06.1995**
(21) Anmeldenummer: 94119215.5
(22) Anmeldetag: 06.12.1994
(51) Int. Cl.: G09F 3/20

(54) **Kabelmarkierclip**

(30) Priorität: 14.12.1993 DE 9319182 U
(71) Anmelder: Idento Gesellschaft für industrielle Kennzeichnung mbH, D-63322 Rödermark (DE)
(72) Erfinder: Müller, Uwe, D-61184 Karben (DE)
(74) Vertreter: Katscher, Helmut, Dipl.-Ing.

(57) **Zusammenfassung**

Ein Kabelmarkierclip weist einen ein Kabel aufnehmenden u-förmigen Clipbügel (3) auf, dessen beide Bügelschenkel (4,5) jeweils mit einer Rückenleiste (6 bzw. 7) verbunden sind, die zusammen ein Cliprückenteil bilden. An der einen Rückenleiste (6) ist ein Fensterflügel angelenkt, der mit der anderen Rückenleiste einrastend verbindbar ist, wobei zwei am Fensterflügel (9) angebrachte, aus der Fensterebene vorspringende Kupplungszapfen (16) jeweils in eine an der anderen Rückenleiste (7) ausgebildete Kupplungsausnehmung (17) einrastend eingreifen. Die Kupplungsausnehmung ist als Durchbrechung (17) mit einem umlaufenden geschlossenen Rand (18) ausgeführt. An ihrer einen Innenseite (19) weist sie eine zum Kupplungszapfen (16) hin geneigte, federnde Sperrzunge (20) auf, die im eingerasteten Zustand sperrend hinter eine hinterschnittene seitliche Raststufe (21) am Kupplungszapfen (16) greift.

## Beschreibung

Die Erfindung betrifft einen Kabelmarkierclip mit einem ein Kabel aufnehmenden u-förmigen Clipbügel, dessen beide Bügelschenkel jeweils mit einer Rückenleiste verbunden sind, die zusammen ein Cliprückenteil bilden, wobei an der einen Rückenleiste ein Fensterflügel angelenkt ist, der mit der anderen Rückenleiste einrastend verbindbar ist, wobei zwei am Fensterflügel angebrachte, aus der Fensterebene vorspringende Kupplungszapfen jeweils in eine an der anderen Rückenleiste ausgebildete Kupplungsausnehmung einrastend eingreifen.

Derartige Kabelmarkierclips sind bekannt (Wo 93/04488). Siedienen dazu, ein mit einer Markierung beschriftetes Beschriftungsblatt an einem zu markierenden Kabel anzubringen. Bei dem bekannten Kabelmarkierclip sind die Kupplungsausnehmungen als jeweils nach einer Seite offene Einschnitte am oberen und unteren Rand der Rückenleiste ausgebildet. Die zugeordneten Kupplungszapfen rasten jeweils mit einem seitlich vorspringenden Rastzahn am inneren Rand des die Kupplungsausnehmung bildenden Einschnitts ein.

Bei einer absichtlichen oder unbeabsichtigten Verformung des Kabelmarkierclips kann die Rastverbindung der Kupplungszapfen am inneren Rand der Kupplungsausnehmung gelöst und der Kabelmarkierclip geöffnet werden. Dadurch löst sich der Kabelmarkierclip vom Kabel und geht verloren, so kann das Beschriftungsblatt ausgewechselt oder seine Beschriftung verändert werden.

Aufgabe der Erfindung ist es daher, einen Kabelmarkierclip der eingangs genannten Gattung so auszubilden, daß er nach dem Anbringen am Kabel nicht mehr geöffnet werden kann, so daß er nicht verlorengehen oder sein Beschriftungsblatt geändert werden kann.

Diese Aufgabe wird erfindungsgemäß dadurch gelöst, daß die Kupplungsausnehmung als Durchbrechung mit einem umlaufend geschlossenen Rand ausgeführt ist und an ihrer einen Innenseite eine zum Kupplungszapfen hin geneigte, federnde Sperrzunge aufweist, die im eingerasteten Zustand sperrend hinter eine hinterschnittene seitliche Raststufe am Kupplungszapfen greift.

Durch die Aufnahme des Kupplungszapfens in der die Kupplungsausnehmung bildenden Durchbrechung mit umlaufend geschlossenem Rand und das Einrasten der schrägen Sperrzunge wird die Rastverbindung so gestaltet, daß sie nur unter Zerstörung des Kabelmarkierclips wieder geöffnet werden kann. Dadurch ist sichergestellt, daß der Kabelmarkierclip am Kabel unverlierbar angebracht ist und daß nachträgliche Manipulationen ausgeschlossen sind, weil das Beschriftungsblatt nach dem erstmaligen Schließen des Kabelmarkierclips nicht mehr zugänglich ist.

Da der Kupplungszapfen in der Kupplungsausnehmung an der der Sperrzunge gegenüberliegenden Seite geführt wird, ist es nicht möglich, den Kupplungszapfen so zu verformen, daß er sich von der Sperrzunge löst. Wird der Kupplungszapfen mit Gewalt aus der Kupplungsausnehmung herausgezogen, so wird die schräggestellte Sperrzunge zerstört.

Gemäß einer bevorzugten Ausführungsform der Erfindung ist vorgesehen, daß der Rand der Kupplungsausnehmung beiderseits der Sperrzunge an der dem Fensterflügel abgekehrten Unterseite der Rückenleiste mindestens ebenso weit vorragt wie die Sperrzunge. Dadurch wird sichergestellt, daß die Sperrzunge im eingerasteten Zustand auch von der Seite her nicht mehr zugänglich ist, so daß die Sperrzunge nicht aus ihrer Sperrstellung zurückgebogen werden kann. Von oben, d.h. vom Fensterflügel her, ist die Sperrzunge im geschlossenen Zustand des Kabelmarkierclips ohnehin nicht zugänglich, weil dort der geschlossene Fensterflügel angeordnet ist.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 eine Draufsicht auf einen Kabelmarkierclip im geöffneten Zustand,
Fig. 2 eine Ansicht des geöffneten Kabelmarkierclips in Richtung des Pfeiles II in Fig. 1,
Fig. 3 eine Ansicht des Kabelmarkierclips in gleicher Richtung wie in Fig. 2, jedoch im geschlossenen Zustand und
Fig. 4 einen Teilschnitt längs der Linie IV-IV in Fig. 3.

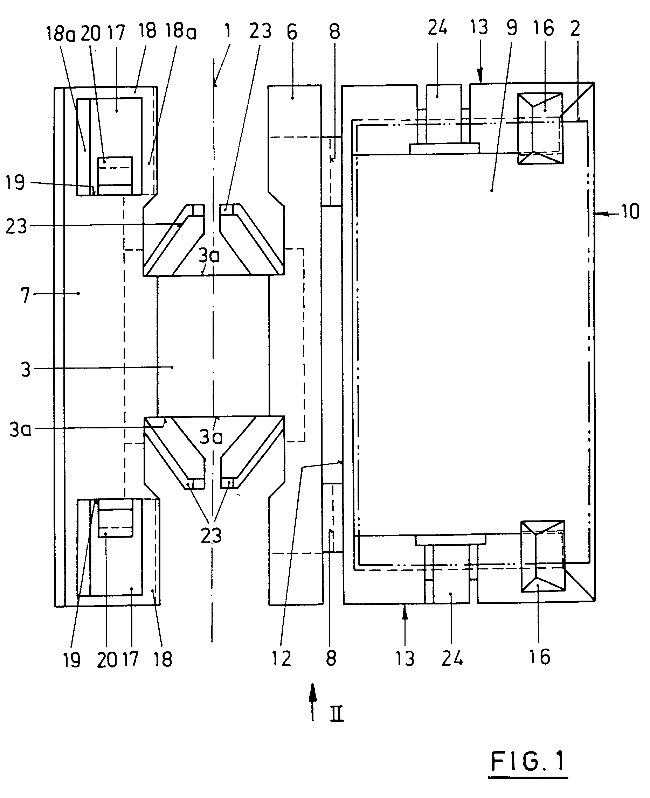

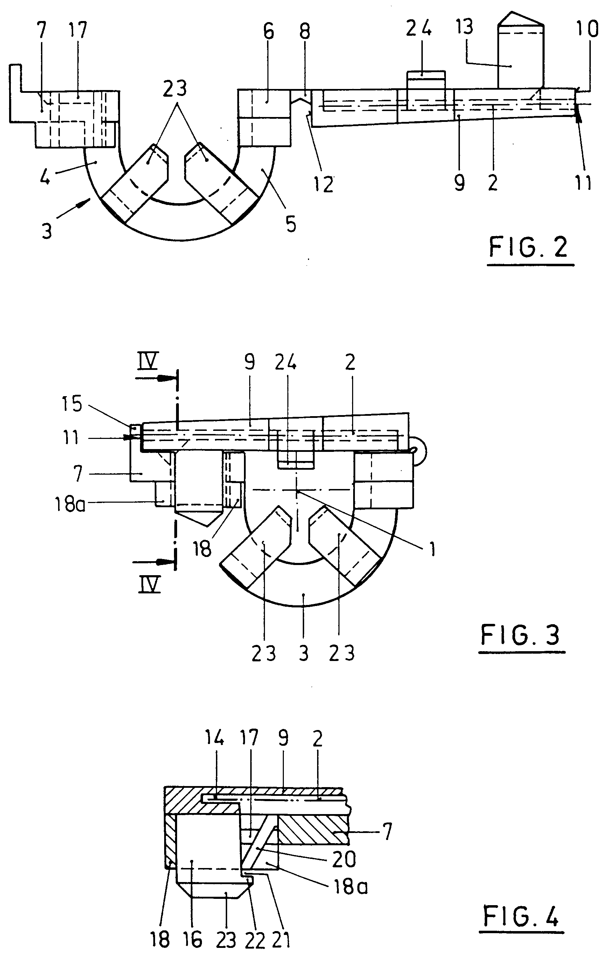

Der in den Fig. 1-4 dargestellte Kabelmarkierclip ist einstückig aus durchsichtigem Kunststoff hergestellt. Er dient dazu, an einem Kabel, dessen Längsachse 1 in den Fig. 1 und 3 angedeutet ist, ein Beschriftungsblatt 2 anzubringen, das in der Zeichnung mit strichpunktierten Linien dargestellt ist.

Der Kabelmarkierclip besteht aus einem im wesentlichen u-förmigen Clipbügel 3, dessen beide Bügelschenkel 4, 5 jeweils mit einer Rückenleiste 6 bzw. 7 verbunden sind. Die beiden parallel und im Abstand zueinander angeordneten Rückenleisten 6, 7 bilden ein Cliprückenteil.

An der einen Rückenleiste 6 ist über biegsame Scharniere 8, die beispielsweise als Filmscharniere ausgeführt sind, ein Fensterflügel 9 angelenkt.

Der Fensterflügel 9 weist an seiner freien Flügelkante 10 einen dort offenen Einführschlitz 11 für das Beschriftungsblatt 2 auf. An den beiden sich radial von der angelenkten Kante 12 des Fensterflügels 9 wegerstreckenden, einander gegenüberliegenden Kanten 13 sind jeweils gegeneinander geöffnete, im Querschnitt u-förmige Einschubnuten 14 (Fig. 4) vorgesehen, die zur Aufnahme des Beschriftungsblattes 2 dienen.

Wie man aus Fig. 3 erkennt, ist der Einführschlitz 11 des Fensterflügels 9 im geschlossenen Zustand des Kabelmarkierclips durch eine davorliegende Randleiste 15 verschlossen, die von der anderen Rückenleiste 7 nach oben vorspringt. Da der Fensterflügel 9 ebenso wie der gesamte Kabelmarkierclip aus durchsichtigem Kunststoff besteht, ist das Beschriftungsblatt 2 im geschlossenen Zustand des Kabelmarkierclips von oben sichtbar, jedoch nicht zugänglich.

Am Fensterflügel 9 sind nahe an den freien Ecken, an denen die Kanten 10 und 13 zusammentreffen, aus der Fensterebene vorspringende Kupplungszapfen 16 vorgesehen. Jeder der beiden Kupplungszapfen 16 paßt in eine zugeordnete, jeweils an einem Ende der Rückenleiste 7 angeordnete Durchbrechung 17, die eine Kupplungsausnehmung bildet. Die Durchbrechung 17 hat einen umlaufend geschlossenen Rand 18. Jeweils an der einen Innenseite 19, die einen Teil des umlaufenden Randes 18 der Durchbrechung 17 bildet, ist eine zum Kupplungszapfen 16 (in geschlossenem Zustand) hin geneigte, federnde Sperrzunge 20 angebracht, die im eingerasteten Zustand sperrend hinter eine hinterschnittene seitliche Raststufe 21 am Kupplungszapfen 16 greift. Die Raststufe 21 wird von einem seitlich vorspringenden Rastzahn 22 des Kupplungszapfens 16 gebildet. Die Spitze 23 des Kupplungszapfens 16 ist dachartig verjüngt ausgeführt, um das Einführen des Kupplungszapfens 16 in die Durchbrechung 17 zu erleichtern.

Wie man aus Fig. 4 erkennt, ist die Sperrzunge 20 vom Mittelteil der Randleiste 7 schräg nach außen und unten gerichtet. Der Rand 18 der Kupplungsausnehmung 17 ragt mit seinen beiderseits der Sperrzunge 20 liegenden Abschnitten 18a an der dem Fensterflügel 9 in geschlossenem Zustand abgekehrten Unterseite der Rückenleiste 7 ebenso weit vor wie die Sperrzunge 20. Man erkennt besonders deutlich aus Fig. 4, daß die Sperrzunge 20 in eingerastetem Zustand von außen her nicht mehr so zugängig ist, daß sie außer Eingriff mit der Raststufe 21 gedrückt werden könnte. Von oben her ist die Durchbrechung 17 durch den Fensterflügel 9 verschlossen. An den beiden Seiten ist die Sperrzunge 20 durch die Abschnitte 18a abgeschirmt; von unten her bietet die Sperrzunge 20 keine Angriffsfläche. Die Rastverbindung des Kupplungszapfens 16 kann somit nur durch Zerstörung der Sperrzunge 20 bzw. Der Kupplungsausnehmung an der Rückenleiste 7 gewaltsam geöffnet werden.

Um den Kabelmarkierclip an dem zu markierenden Kabel zu halten und eine Anpassung an unterschiedliche Kabeldurchmesser zu ermöglichen, springen von den beiden Rändern 3a des u-förmigen Clipbügels 3 jeweils zwei Federzungen 23 schräg nach innen vor, die sich mit ihren freien Enden federnd am aufzunehmenden Kabel anlegen. Die beiden Federzungen 23 sind - bezogen auf die Längsachse 1 des aufzunehmenden Kabels - im Winkel von beispielsweise etwa 90° zueinander angeordnet.

Ebenfalls auf jeder Seite des Clipbügels 3 ist im geschlossenen Zustand (Fig. 3) eine dritte Federzunge 24 angeordnet, die sich mit ihrem freien Ende ebenfalls am Kabel federnd anlegt. Diese dritte Federzunge 24 springt jeweils vom Rand 13 des Fensterflügels 9 zum aufzunehmenden Kabel hin vor.

Der Kabelmarkierclip wird nach dem Einlegen des Beschriftungsblattes 2 im geöffneten Zustand um das zu markierende Kabel gelegt, wobei der Fensterflügel 9 beispielsweise schon um etwa 90° angewinkelt ist. Sodann wird der Fensterflügel 9 geschlossen, wobei die Kupplungszapfen 16 unlösbar in den Durchbrechungen 17 einrasten. In dieser geschlossenen Stellung ist das Beschriftungsblatt 2 von außen nicht mehr zugänglich.

## Patentansprüche

1. Kabelmarkierclip mit einem ein Kabel aufnehmenden u-förmigen Clipbügel (3), dessen beide Bügelschenkel (4,5) jeweils mit einer Rückenleiste (6 bzw. 7) verbunden sind, die zusammen ein Cliprückenteil bilden, wobei an der einen Rückenleiste (6) ein Fensterflügel angelenkt ist, der mit der anderen Rückenleiste einrastend verbindbar ist, wobei zwei am Fensterflügel (9) angebrachte, aus der Fensterebene vorspringende Kupplungszapfen (16) jeweils in eine an der anderen Rückenleiste (7) ausgebildete Kupplungsausnehmung (17) einrastend eingreifen, dadurch gekennzeichnet, daß die Kupplungsausnehmung als Durchbrechung (17) mit einem umlaufenden geschlossenen Rand (18) ausgeführt ist und an ihrer einen Innenseite (19) eine zum Kupplungszapfen (16) hin geneigte, federnde Sperrzunge (20) aufweist, die im eingerasteten Zustand sperrend hinter eine hinterschnittene seitliche Raststufe (21) am Kupplungszapfen (16) greift.

2. Kabelmarkierclip nach Anspruch 1, dadurch gekennzeichnet, daß der Rand (18, 18a) der Kupplungsausnehmung (17) beiderseits der Sperrzunge (20) an der dem Fensterflügel (9) abgekehrten Unterseite der Rückenleiste (7) mindestens ebenso weit vorragt wie die Sperrzunge (20).

3. Kabelmarkierclip nach Anspruch 1, dadurch gekennzeichnet, daß der Fensterflügel (9) einen an seiner freien Flügelkante (10) offenen Einführschlitz (11) und an seinen beiden sich radial von seiner angelenkten Kante (12) wegerstreckenden, einander gegenüberliegenden Kanten (13) jeweils gegeneinander geöffnete, im Qurschnitt u-förmige Einschubnuten (14) zur Aufnahme des Beschriftungsblattes (2) aufweist.

4. Kabelmarkierclip nach Anspruch 1, dadurch gekennzeichnet, daß von den beiden Rändern (3a) des Clipbügels (3) jeweils zwei Federzungen (23) schräg nach innen vorspringen.

5. Kabelmarkierclip nach Anspruch 4, dadurch gekennzeichnet, daß die beiden Federzungen (23) bezogen auf die Längsachse (1) des aufzunehmenden Kabels im Winkel zueinander angeordnet sind.

6. Kabelmarkierclip nach Anspruch 4, dadurch gekennzeichnet, daß auf jeder Seite des Clipbügels (3) jeweils eine dritte Federzugen (24) angeordnet ist, die vom Rand (13) des Fensterflügels (9) zum aufznehmenden Kabel hin vorspringt.
